**Europäisches Patentamt**

**European Patent Office**

**Office européen des brevets**

(19)

(11) Veröffentlichungsnummer: **0 086 895**

**A1**

(12) # EUROPÄISCHE PATENTANMELDUNG

(21) Anmeldenummer: **82111792.6**

(22) Anmeldetag: **18.12.82**

(51) Int. Cl.³: **C 08 G 59/42**

(30) Priorität: **18.02.82 DE 3205820**

(43) Veröffentlichungstag der Anmeldung:
**31.08.83 Patentblatt 83/35**

(84) Benannte Vertragsstaaten:
**AT BE CH DE FR GB IT LI NL SE**

(71) Anmelder: **CHEMISCHE WERKE HÜLS AG
- RSP Patente / PB 15 - Postfach 13 20
D-4370 Marl 1(DE)**

(72) Erfinder: **Gude, Fritz, Dr.
Wilhelmstrasse 4
D-4690 Herne 2(DE)**

(72) Erfinder: **Haferkorn, Herbert
Horster Strasse 528
D-4250 Bottrop(DE)**

(72) Erfinder: **Riemer, Heinz, Dr.
Fritz-Reuter-Strasse 15
D-4250 Bottrop 2(DE)**

(72) Erfinder: **Mutzberg, Friedhelm
Gleiwitzer Strasse 55
D-4330 Mülheim (Ruhr)(DE)**

(54) **Neue flüssige Anhydridhärter für Epoxidharzmassen.**

(57) Ein flüssiger Anhydridhärter für Epoxidharzmassen, der aus einem Gemisch von 95 - 60 Gew.% Hexahydrophthalsäureanhydrid und 5 - 40 Gew.% isomerisiertem 3-Methyltetrahydrophthalsäureanhydrid besteht und das isomerisierte 3-Methyltetrahydrophthalsäureanhydrid bis zu 30 Gew.% durch 4-Methyltetrahydrophthalsäureanhydrid ersetzt sein kann.

EP 0 086 895 A1

Neue flüssige Anhydridhärter für Epoxidharzmassen

Bei Zimmertemperatur flüssige Dicarbonsäureanhydride bzw. Dicarbonsäureanhydridgemische sind begehrte Härter für Epoxidharze. Durch ihre Struktur bedingt, besitzen sie einen wesentlichen Einfluß auf die Eigenschaften der durch sie gehärteten Harze. So stellte sich z.B. heraus, daß sich mit Alkenyl- bzw. Alkylbernsteinsäureanhydriden gehärtete Epoxidharze nur Produkte mit geringen Wärmestandfestigkeiten gewinnen lassen. Entgegengesetzt dazu wirkt der Einsatz von cycloaliphatischen Anhydriden, wie man sie durch Diels-Alder-Reaktionen von aliphatischen Dienen mit z.B. Maleinsäureanhydrid, gegebenenfalls auch nach Hydrierung der Doppelbindung, gewinnt. Sehr positiv auf die Chemikalienfestigkeit wirken sich gesättigte Substanzen mit möglichst niederem Molgewicht pro Anhydrid aus.

So ist Hexahydrophthalsäureanhydrid, üblicherweise hergestellt durch Diels-Alder-Reaktion von Maleinsäureanhydrid und Butadien mit anschließender Hydrierung der Substanz, an sich ein guter und wirtschaftlich herstellbarer Härter für Epoxide. Die Wärmestandfestigkeit, die elektrischen und mechanischen Eigenschaften und die Stabilität der gehärteten Massen gegenüber Witterungseinflüssen sind positiv hervorzuheben.

Als Nachteil steht dem der feste Aggregatzustand des Härters bei Raumtemperatur gegenüber, der die Handhabung erschwert, sowie die Anfälligkeit gegenüber Feuchtigkeit, die zur Trübung durch Säureausfällung und dadurch zu Schwierigkeiten beim Verpumpen und Aufschmelzen führt.

Es hat nicht an Bemühungen gefehlt, Hexahydrophthalsäureanhydrid durch Mischung mit anderen geeigneten Substanzen oder Umwandlung zu einem flüssigen Härter zu verarbeiten.

So ist nach DE-PS 1 595 458 bekannt, Hexahydrophthalsäureanhydrid durch Verkochen mit Epoxidharzen unter Zugabe von Tetrahydrophthalsäureanhydrid in einen flüssigen Härter zu überführen. Derart hergestellte Härter zeigen aber eine geringe Beständigkeit gegenüber Feuchtigkeitsaufnahme. Außerdem weisen mit diesen Härtern gehärtete Gießharzmassen geringe Chemikalien- und Wärmebeständigkeit auf.

In der DE-PS 2 231 892 wird vorgeschlagen, ein Gemisch von Hexahydrophthalsäureanhydrid und Tetrahydrophthalsäuren-hydrid oder Methyltetrahydrophthalsäureanhydrid bzw. ihre Isomerisierungsprodukte und gegebenenfalls Dicarbonsäure-anhydride, bestehend aus Phthalsäureanhydrid, Maleinsäure-anhydrid, Bernsteinsäureanhydrid, Glutarsäureanhydrid, für die Epoxidierung zu verwenden, das noch zusätzlich als Stabilisierungsmittel ξ-Caprolactam, N-Methylcaprolactam oder N-Methylpyrrolidon enthält. Ein Zusatz eines solchen Stabilisierungsmittels in einer Menge zwischen 1 und 15 Gew.% - bezogen auf die Mischung der Anhydride - ist deshalb nötig, weil die Anhydridgemische gemäß der Patentschrift sonst bei Zimmertemperatur in wenigen Tagen auskristallisieren würden.
Der Nachteil dieser nicht mit dem Epoxid reagierenden Zusätze ist die Bildung von Lunkern und Blasen der mit den vorgeschlagenen Systemen heißgehärteten Epoxidharze. Ein weiterer Nachteil besteht in der erhöhten Lösungsmittelempfindlichkeit. In diesem Schutzrecht wird die Stellung der Methylgruppe in dem Methyltetrahydrophthalsäureanhydrid nicht erwähnt. Aus der Tatsache, daß ein Gemisch von Hexahydrophthalsäureanhydrid und Methyltetrahydrophthalsäureanhydrid ohne Stabilisator in einigen Tagen bei Raumtemperatur ausfällt, ist ableitbar, daß es sich bei dem verwendeten

Methyltetrahydrophthalsäureanhydrid nicht um 3-Methyltetrahydrophthalsäureanhydrid - also um das Anlagerungsprodukt von trans-Pentadien-(1,3) an Maleinsäureanhydrid bzw.
seinen Isomerisierungsprodukten - handeln kann.

Das durch Anlagerung von trans-Pentadien-(1,3) an Maleinsäureanhydrid entstehende 3-Methyltetrahydrophthalsäureanhydrid ist z.B. nach Erhitzen auf 120-250°C bei Zimmertemperatur flüssig. Weitere Verbesserungen der Eigenschaften
erreicht man, wenn 10-20 Gew.% des eingesetzten trans-Pentadiens-(1,3) durch Isopren ersetzt wird (DE-PS 2 159 420).
Im Gegensatz zu Hexahydrophthalsäureanhydrid zeigt der
Härter nur geringe Tendenz, Feuchtigkeit aufzunehmen und zu
gelieren. In der Harz-Härter-Mischung ist der geringe Viskositätsanstieg hervorzuheben, so daß die Mischung an sich
länger haltbar ist.
Durch seine Doppelbindung bedingt, besteht jedoch eine ausgesprochene Instabilität gegenüber Witterungseinflüssen,
so daß die gehärteten Epoxidmassen nur für die Innenanwendung geeignet sind. Ihre Wärmestandfestigkeit und Chemikalienbeständigkeit sind deutlich geringer als die mit Hexahydrophthalsäureanhydrid gehärteten Epoxidharze.

Es stellt sich nun heraus, daß sich eine Reihe von positiven,
zum Teil überraschenden Eigenschaften einstellen, wenn man
Gemische von Hexahydrophthalsäureanhydrid und das in
DE-PS 2 159 420 beschriebene Isomerengemisch des 3-Methyltetrahydrophthalsäureanhydrids, das gegebenenfalls bis zu
30 Gew.% durch 4-Methyltetrahydrophthalsäureanhydrid ersetzt werden kann, im Verhältnis 95 zu 5 bis 60 zu 40 Gew.%
verwendet. Ohne wesentlichen Einfluß auf die Ergebnisse
können die erfindungsgemäßen Härtermischungen bis zu 40 Gew.%
der oben genannten Isomerengemische enthalten. Überraschenderweise verhält sich dieses Härtergemisch gegenüber Feuchtigkeit günstiger, als jede der Einzelkomponenten. Dieses
zeigt sich sowohl in den Gelierzeiten, als auch im Viskositätsanstieg der Epoxidhärter. Gleichzeitig werden in der genannten Abmischung hinreichend gute Wärme- und Chemikalienbeständigkeiten erreicht.

Gegenstand der Erfindung sind daher neue flüssige Anhydridhärter für Epoxidharzmassen, bestehend aus einem Gemisch
von 95-60 Gew.% Hexahydrophthalsäureanhydrid und 5-40 Gew.%
isomerisiertem 3-Methyltetrahydrophthalsäureanhydrid, wobei das isomerisierte 3-Methyltetrahydrophthalsäuren-
hydrid gegebenenfalls bis zu 30 Gew.% durch 4-Methyltetrahydrophthalsäureanhydrid ersetzt sein kann.

## Beispiele

1) Schmelzpunkte der Mischungen

Gemische aus Hexahydrophthalsäureanhydrid (HHPSA) und
isomerisiertem 3-Methyltetrahydrophthalsäureanhydrid mit
einem Anteil von 20 Gew.% 4-Methyltetrahydrophthalsäureanhydrid (im weiteren "Isomerengemisch 80/20" genannt)
wurden unterhalb der Schmelzpunkte abgekühlt und anschließend wieder erwärmt. Dabei zeigten sich folgende
Ergebnisse:

| HHPSA (Gew.%) | Isomerengemisch 80/20 | Schmelzpunkt ($^{o}$C) |
|---|---|---|
| 95 | 5 | + 28 |
| 90 | 10 | + 18 |
| 85 | 15 | + 11 |
| 80 | 20 | - 2 |
| 75 | 25 | - 11 |
| 70 | 30 | - 12 |

Unter Ausschluß von Luft und Feuchtigkeit blieben die Gemische in einem 6-monatigen Test beim Aufbewahren oberhalb ihrer Schmelzpunkte klar. Es zeigten sich keine Ausfällungen.

## 2) Hydrolyseverhalten

Je 30 g HHPSA, Isomerengemisch 80/20, 4-Methyltetrahydrophthalsäureanhydrid (4-MTHPSA), eine Härtermischung aus 70 Gew.-Teilen HHPSA und 30 Gew.-Teilen Isomerengemisch 80/20 sowie eine Härtermischung aus 80 Gew.-Teilen HHPSA und 20 Gew.-Teilen Isomerengemisch 80/20 werden in Kristallisierschalen von 6 cm Durchmesser bei 23°C und 90 % Luftfeuchtigkeit gelagert. Durch Bestimmung der Gewichtszunahme wird die Feuchtigkeitsaufnahme ermittelt. Aus der nachfolgenden Tabelle ist ersichtlich, daß die erfindungsgemäß verwendeten Gemische aus HHPSA und Isomerengemisch 80/20 gegenüber den anderen geprüften Anhydriden wesentlich weniger feuchtigkeitsempfindlich sind.

Feuchtigkeitsaufnahme (in %) bei 23°C
und 90 % Luftfeuchtigkeit

| Tage | Isomeren-gemisch 80/20 | 4-MTHPSA | HHPSA | HHPSA : 70:30 | Isomeren-gemisch 80/20 80:20 |
|---|---|---|---|---|---|
| 1 | 0,4 | 0,4[b] | 0,5 | 0,3 | 0,4 |
| 3 | 2,0 | 1,0[c] | 2,5[c] | 0,9 | 1,3 |
| 7 | 7,3[a] | 2,3[c] | 2,7[c] | 1,8 | 2,5 |
| 10 | 9,0[a] | 2,4[c] | 2,7[c] | 2,1 | 2,5 |

a) geliert

b) beginnende Kristallisation

c) vollständig auskristallisiert

## 3) Viskositätsverhalten im Gemisch mit Epoxidharzen

Je 30 g der im Beispiel 2) verwendeten Anhydride werden mit 30 g eines Epoxidharzes des Typs Bisphenol A mit einem Epoxidwert von 0,56 bis 0,57 (z.B. Rütapox 0162 der Firma Bakelite GmbH) gemischt. An diesen Gemischen wird in einem Höppler-Viskosimeter bei 70°C die Viskosität gemessen. Nach der Messung werden die Gemische 20 Stunden bei 100°C gelagert und anschließend wird noch einmal bei 70°C die Viskosität gemessen. Aus der nachfolgenden Tabelle ist ersichtlich, daß bei den Härtergemischen HHPSA-Isomerengemisch 80/20 der geringste Viskositätsanstieg auftritt.

## Viskosität in mPas bei 70 °C

| | Isomeren-gemisch 80/20 | 4-MTHPSA | HHPSA | HHPSA:Isomerengemisch 80/20 70:30 | 80:20 |
|---|---|---|---|---|---|
| zu Anfang | 17,6 | 19,9 | 25,6 | 19,3 | 19,3 |
| nach 20 Stunden 100 °C | 23,5 | 23,4 | 29,4 | 21,0 | 21,6 |

4) Wärmestandsvermögen und Kriechstromfestigkeiten

100 Gewichtsteile Epoxidharz des Typs Bisphenol A mit einem Epoxidwert von 0,50 bis 0,55 (z.B. Epikote 828 der Firma Shell GmbH) werden mit jeweils äquivalenten Mengen, d.h. 82 Gewichtsteilen HHPSA, 88 Gewichtsteilen Isomerengemisch 80/20, 88 Gewichtsteilen 4-MTHPSA und je 84 Gewichtsteilen eines Gemisches aus HHPSA und Isomerengemisch 80/20 im Gewichtsverhältnis 70:30 und 80:20 sowie mit 1,0 Gewichtsteilen Benzyldimethylamin (Beschleuniger) bei 23°C gemischt.

Die Epoxidharz-Härter-Beschleuniger-Mischungen werden in entsprechende Formen gegossen und anschließend 2 Stunden bei 120°C gehärtet. Aus der nachfolgenden Tabelle ist ersichtlich, daß die Proben mit den erfindungsgemäßen Anhydridgemischen HHPSA und Isomerengemisch 80/20 in den Gewichtsverhältnissen 70:30 und 80:20 in den ermittelten Werten für die Martenstemperatur sowie für die Kriechstromfestigkeit mit den angeführten Werten der übrigen Proben
übereinstimmen.

|  | Isomeren- gemisch 80/20 | 4-MTHPSA | HHPSA | HHPSA : Isomerengemisch 80/20 | |
|  |  |  |  | 70:30 | 80:20 |
|---|---|---|---|---|---|
| Formbeständigkeit in der Wärme nach Martens DIN 53 458 °C | 110-115 | 110-115 | 110-115 | 110-115 | 110-115 |
| Kriechstromfestig- keit 380 V | KA3c | KA3c | KA3c | KA3c | KA3c |
| DIN 53480 600 V | KC > 500 | KC>500 | KC>500 | KC>500 | KC>500 |

0086895
O.Z. 3794-H

Patentanspruch:

Neue flüssige Anhydridhärter für Epoxidharzmassen, bestehend aus einem Gemisch von 95 - 60 Gew.% Hexahydrophthalsäureanhydrid und 5-40 Gew.% isomerisiertem 3-Methyltetrahydrophthalsäureanhydrid, wobei das isomerisierte 3-Methyltetrahydrophthalsäureanhydrid gegebenenfalls bis zu 30 Gew.% durch 4-Methyltetrahydrophthalsäureanhydrid ersetzt sein kann.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | INTERNATIONAL POLYMER SCIENCE AND TECHNOLOGY, Band 1, Nr. 9, 1974, Seiten 73-74, Shrewsbury R.S. KHOLODOVSKAYA et al: "New liquid hardener for epoxy resins" * Seite 73, rechte Spalte, Zeilen 28-33; Seite 74, rechte Spalte, Zeilen 8-13 * | 1 | C 08 G 59/42 |
| D,Y | DE-A-2 231 892 (SCHERING) * Ansprüche * | 1 | |
| A | FR-A-2 189 452 (BAYER) * Ansprüche * | 1 | |
| A | DE-A-1 917 519 (NEW JAPAN CHEMICAL CY.) * Ansprüche * | 1 | RECHERCHIERTE SACHGEBIETE (Int. Cl. 3) |
| | ----- | | C 08 G |

Der vorliegende Recherchenbericht wurde für alle Patentansprüche erstellt.

| Recherchenort DEN HAAG | Abschlußdatum der Recherche 20-05-1983 | Prüfer MALHERBE Y.J.M. |
|---|---|---|